## Europäisches Patentamt
## European Patent Office
## Office européen des brevets

(19)

(11) Veröffentlichungsnummer: **0 314 033**
**B1**

(12) **EUROPÄISCHE PATENTSCHRIFT**

(45) Veröffentlichungstag der Patentschrift:
**01.08.90**

(51) Int. Cl.⁵: **B60S 1/38**

(21) Anmeldenummer: **88117645.7**

(22) Anmeldetag: **22.10.88**

(54) Scheibenwischer, insbesondere für Kraftfahrzeuge.

(30) Priorität: **29.10.87 DE 3736585**

(43) Veröffentlichungstag der Anmeldung:
**03.05.89 Patentblatt 89/18**

(45) Bekanntmachung des Hinweises auf die Patenterteilung:
**01.08.90 Patentblatt 90/31**

(84) Benannte Vertragsstaaten:
**ES FR GB IT**

(56) Entgegenhaltungen:
**DE-A- 1 809 096**
**GB-A- 2 103 075**

(73) Patentinhaber: **SWF Auto-Electric GmbH, Stuttgarter Strasse 119 Postfach 135,
D-7120 Bietigheim-Bissingen(DE)**

(72) Erfinder: **Scholl, Wolfgang, Forststrasse 29,
D-7121 Gemmrigheim(DE)**
Erfinder: **Schmid, Eckhardt, Heilbronnerstrasse 62,
D-7129 Brackenheim(DE)**

ACTORUM AG

## Beschreibung

Die Erfindung bezieht sich auf einen Scheibenwischer, insbesondere für Kraftfahrzeuge, gemäß dem Merkmalen des Oberbegriffs des Anspruchs 1. (Scheibenwischer, der z.B. dem nach der DE-A 1 809 096 ähnlich ist.)

Zu den Wischanlagen moderner Kraftfahrzeuge, die meist eine gewölbte Windschutzscheibe aufweisen, gehört üblicherweise ein Wischblatt mit einem Tragbügelsystem bestehend aus einem Hauptbügel und mehreren Krallen- und/oder Zwischenbügeln, die eine Wischgummileiste führen. In seitliche Nuten dieser Wischgummileisten sind Federschienen eingelegt, über die der vom Wischarm auf das Wischblatt einwirkende Anpreßdruck gleichmäßig über die ganze Länge der Gummiwischleiste verteilt werden soll. Damit ein ausreichend hoher Anpreßdruck auch beim Überfahren verhältnismäßig ebener Scheibenbereiche gewährleistet ist, sind diese Federschienen in unbelastetem Zustand vorgespannt, d. h. sie haben eine bogenförmige Kontur. Sie sind der Gummiwischleiste derart zugeordet, daß diese in unbelastetem Zustand eine in bezug zum Tragbügelsystem konvex gekrümmte Lage einnimmt. Liegt das Wischblatt zu einer zu reinigenden Scheibe auf, wird diese Federschiene also entgegen ihrer Vorspannkraft in unbelastetem Zustand verformt, weil der über den Wischarm eingeleitete Anpreßdruck natürlich wesentlich größer ist als die von der Federschiene erzeugte, dieser Anpreßkraft entgegengerichtete Vorspannkraft. Hebt man das Wischblatt von der Scheibe ab, nimmt aber die Federschiene und damit auch die Wischleiste wieder ihre ursprüngliche, über dem Tragbügelsystem konvex gekrümmte Lage ein.

Es ist bekannt, daß die Wischqualität eines solchen Scheibenwischers wesentlich von der Qualität der Wischlippe an der Gummiwischleiste abhängt. Diese Wischlippe ist erheblichen Belastungen im Wischbetrieb ausgesetzt. Aber auch in der Parkstellung eines Wischblattes besteht die Gefahr einer Deformierung dieser Wischlippe aufgrund einer dauerplastischen Verformung, insbesondere wenn die Wischanlage bei hohen Umgebungstemperaturen längere Zeit nicht in Betrieb genommen wird. Es sind daher bereits Wischanlagen bekannt, bei denen der Wischarm kurz vor der Parkstellung des Scheibenwischers auf eine Rampe aufläuft, so daß die von der Anpreßdruckfeder des Wischarms herrührende Kraft nicht mehr oder zumindest nicht in dem bisherigen Umfang auf die Wischlippe einwirken kann. Auf diese Weise kann eine dauerplastische Verformung der Wischlippe in gewissen Grenzen verhindert werden, was die Wischqualität bzw. die Lebensdauer des Scheibenwischers verbessert. Eine allen Anforderungen gerecht werdende, unversell verwendbare Lösung wurde aber nicht vorgestellt.

Der vorliegenden Erfindung liegt die Aufgabe zugrunde, mit möglichst einfachen Mitteln einen Scheibenwischer für solche Scheibenwischeranlagen zu schaffen, bei denen die Wischlippe zuverlässig entlastet ist.

Diese Aufgabe wird erfindungsgemäß mit den kennzeichnenden Merkmalen des Anspruchs 1 gelöst.

Die Erfindung geht dabei von der Überlegung aus, daß bei einer Entlastung des Scheibenwischers von dem Anpreßdruck die Federschiene wieder in ihre weitestgehend konvex gekrümmt Lage zurückfedert un damit gewissermaßen die Bauhöhe des Scheibenwischers in unbelastetem Zustand unnötigerweise vergrößert. Für völlige Druckentlastung war daher bei herkömmlichen Wischeranlagen eine verhältnismäßig hohe Rampe erforderlich, was jedoch insbesondere dann nicht möglich war, wenn der Scheibenwischer in einer sogenannten versenkten Parkstellung in den Schlitz zwischen einer Motorhaube und der zu reinigenden Windschutzscheibe abgelegt wird. Durch die erfindungsgemäße Begrenzung der konvexen der Federschiene in der Parklage wird gewissermaßen die maximal mögliche Bauhöhe des Scheibenwischers begrenzt, so daß auch schon bei einer kleineren Rampe eine völlige Entlastung der Wischlippe möglich ist und diese Wischlippe an keiner Stelle auf der zu reinigenden Scheibe aufliegt. Mit Scheibenwischern nach der vorliegenden Erfindung ist also ein völlige Entlastung der Wischlippe auch bei beengten Platzverhältnissen in der Parkstellung des Scheibenwischers möglich.

Der Grundgedanke der vorliegenden Erfindung kann auf unterschiedliche Arten realisiert werden. Bei einer bevorzugten Ausführung sind Mittel vorgesehen, die eine konvexe Durchbiegung der Federschiene über ein bestimmtes Maß hinaus in jeder Wischblattstellung während der Wischbewegung und natürlich auch in der Parkstellung verhindern. Dies kann prinzipiell dadurch erreicht werden, daß man bei den herkömmliche Tragbügelsystemen die Schwenkbarkeit eines Bügels begrenzt, und damit gewissermaßen über die Begrenzung der Schwenkbewegung der Bügel auch eine Begrenzung der möglichen Durchbiegung der Federschiene erreicht.

Bei einer anderen Ausführungsform kann man aber auch direkt Mittel zwischen einem Hauptbügel und der Federschiene oder der Wischleiste derart vorsehen, daß ein maximaler Abstand zwischen der Wischleiste und diesem Tragbügel nicht überschritten werden kann. Solche Lösungen sind insbesondere für Wischblätter denkbar, die keine schwenkbar an einem Hauptbügel aufgehängten Krallenbügel aufweisen.

Bei einer anderen Ausführungsform des Grundgedankens der vorliegenden Erfindung sind Mittel derart vorgesehen, daß eine konvexe Durchbiegung der Federschiene über ein bestimmtes Maß hinaus nur in einer Parkstellung des Wischblattes verhindert wird. Einbe Lösung nach diesem Prinzip kann beispielsweise derart ausgestaltet sein, daß durch karosseriefest angeordnete Abstandshalter die Krallenbügel eines die wischleiste führenden Tragbügelsystems in einer zur Scheibe parallelen Lage ausgerichtet werden. Dies kann man beispielsweise durch Abstandshalter erreichen, von denen jeweils zwei links und rechts des Aufhängepunktes unter einen Krallenbügel greifen.

Die Erfindung und deren vorteilhafte Ausgestaltungen werden nachstehend anhand des in der Zeichnung dargestellten Ausführungsbeispieles näher erläutert. Es zeigen:

Fig. 1 eine Seitenansicht auf eine Wischblatthälfte,
Fig. 2 eine Ansicht auf eine unbelastete Federschiene,
Fig. 3 einen Schnitt entlang der Schnittlinie III-III in Fig. 1 und
Fig. 4 einen Schnitt durch ein Wischblatt bei einer anderen Ausführungsform.

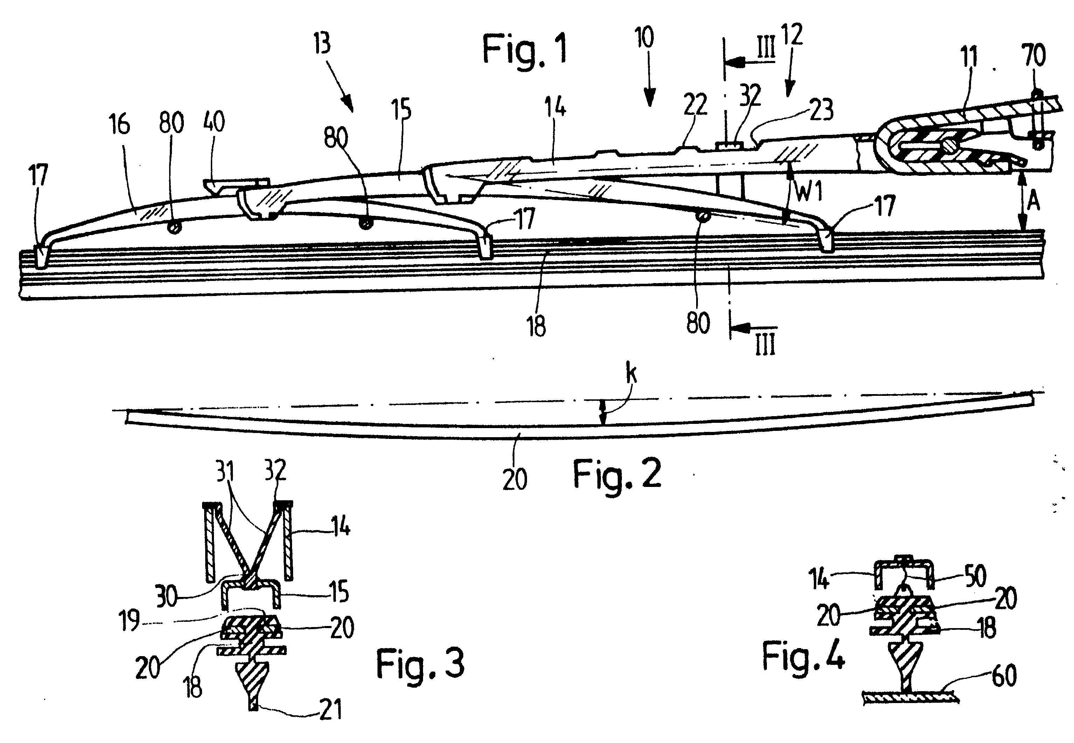

Zu dem insgesamt mit 10 bezeichneten Scheibenwischer gehört ein Wischarm 11, an dem schwenkbeweglich ein Wischblatt 12 aufgehängt ist, von dem in Fig. 1 die linke Hälfte dargestellt ist. Zu diesem Wischblatt 12 gehört ein Tragbügelsystem 13, das in dem gezeigten Ausführungsbeispiel aus einem Hauptbügel 14, einem daran schwenkbar aufgehängten Zwischenbügel 15 und einem daran schwenkbar aufgehängten Krallenbügel 16 besteht. Der Krallenbügel 16 hat zwei Krallen 17 und der Zwischenbügel 15 eine weitere Kralle 17 zur Führung einer Gummiwischleiste 18, die in an sich bekannter Weise seitlich zwei Nuten 19 aufweist, in die Federschienen 20 aus Stahl eingelegt sind. Über diese Federschienen 20 soll der über den Wischarm 11 und das Tragbügelsystem 13 zu den Krallen 17 eingeleitete Anpreßdruck gleichmäßig über die gesamte Länge der Wischleiste 18 verteilt werden. Damit nun ein ausreichender Anpreßdruck auch bei geringen Scheibenkrümmungen erreicht wird, verwendet man üblicherweise Federschienen, die in unbelastetem Zustand eine in Fig. 2 dargestellt Lage einnehmen. Diese Federschienen 20 sind dabei in diese Nuten 19 derart eingelegt, daß in unbelastetem Zustand die Federschiene 20 und damit auch die Gummiwischleiste 18 eine in bezug zum Tragbügelsystem konvex gekrümmte Lage einnimmt. Die maximal mögliche Bauhöhe eines solchen Scheibenwischers zwischen dem freien Ende der Wischlippe 21 und dem Rücken 22 des Tragbügels wird also maßgeblich beeinflußt von der in unbelastetem Zustand vorhandenen Krümmung dieser Federschiene 20 entsprechend dem Maß k in Fig. 2.

Aus den Fig. 1 und 3 geht hervor, daß zwischen dem Zwischenbügel 15 und dem Hauptbügel 14 ein Fanghaken 30 vorgesehen ist, der den Drehwinkel W1 des Zwischenbügels 15 relativ zum Hauptbügel 14 begrenzt. Dieser Fanghaken 30 ist aus Kunststoff hergesstellt und bei den gezeigten Ausführungsbeispielen an den Zwischenbügel 15 angespritzt. Er steht nahezu senkrecht von dessen Längsrichtung ab, durchsetzt mit zwei V-förmig gespreizten Armen 31 einen Durchbruch 23 im Rücken oder Steg 22 des Hauptbügels 14. Von den freien Enden dieser Arme 31 stehen Haken 32 ab, die in der Fig. 1 dargestellten gestreckten Lage der Gummiwischleiste 18 gerade am Steg 22 des Tragbügels anliegen. Fig. 1 zeigt also die Verhältnisse, bei denen der Schwenkwinkel W1 auf den maximal möglichen Wert begrenzt ist. Diese Verhältnisse treten auf, wenn der Scheibenwischer von der zu reinigenden Scheibe abgehoben und dann die die Wischlippe 21 völlig entlastet wird. Während des normalen Betriebs ist dagegen die Gummiwischleiste und die Federschiene konkav gekrümmt, wobei der Schwenkwinkel zwischen dem Zwischenbügel 15 und dem Hauptbügel 14 verkleinert wird, wenn das Wischblatt über eine gekrümmte Scheibe bewegt wird.

Insgesamt ist als festzustellen, daß durch bestimmte Mittel, im vorliegenden Fall durch den Fanghaken 30, die konvexe Krümmung der Federschiene 20 auf einen Wert begrenzt wird, der kleiner ist als der in unbelastetem Zustand maximal mögliche Wert, der durch die Größe k charakterisiert werden kann. Es ist außerdem ersichtlich, daß diese Begrenzung der Krümmung der Federschiene durch Mittel erreicht wird, die den Schwenkwinkel des Zwischenbügels 15 relativ zum Hauptbügel 14 begrenzen. Allgemein kann gesagt werden, daß der Schwenkwinkel eines untergeordneten Bügels gegenüber einem übergeordneten Bügel einseitig begrenzt wird. Bei der in der Zeichnung dargestellten Ausführung sind die Verhältnisse so gewählt, daß die maximal mögliche konvexe Krümmung der Federschiene, also das Maß k gleich Null ist und folglich nur eine konkave Krümmung der Federschiene möglich ist. Der Vorteil der vorliegenden Erfindung, also eine niedrige Bauhöhe des Scheibenwischers und damit ein geringer Abhebewinkel zur Entlastung der Wischlippe wird natürlich auch schon dann erreicht, wenn durch die Mittel, also den Fanghaken 30, die die Krümmung charakterisierende Größe k lediglich verkleinert wird. Es sind also durchaus Verhältnisse denkbar, bei denen auch in der abgehobenen, völlig entlasteten Stellung des Wischers die Federschiene und damit die Gummiwischleiste leicht konvex gekrümmt ist.

In Fig. 1 ist noch eine weitere Alternative angedeutet. Vom Rücken oder Steg des Zwischenbügels 15 geht nämlich ein Drehbegrenzungsanschlag 40 aus, der auf den Steg oder Rücken 22 des untergeordneten Krallenbügels 16 einwirkt und dessen Schwenkwinkel relativ zum Zwischenbügel ebenfalls einseitig begrenzt. Eine solche Lösung könnte man natürlich auch zwischen dem Hauptbügel 14 und dem Zwischenbügel 15 vorsehen, so daß dann ein Fanghaken 30 nicht benötigt wird. Die Lösung mit dem Fanghaken wird jedoch bevorzugt, weil die Mittel zur Begrenzung der Drehbewegung eines untergeordneten Bügels möglichst weit von der Gelenkachse entfernt sein sollten, damit sich unvermeidbare Toleranzen in der Länge des Fanghakens nicht unzulässig auswirken können.

Bei den bisher beschriebenen Ausführungsbeispielen wird die Krümmung der Federschiene durch Maßnahmen begrenzt, die indirekt auf diese Federschiene wirken, nämlich über die Krallen- oder Zwischenbügel. In Fig. 4 ist nun eine Ausführung angedeutet, bei der diese Mittel zur Begrenzung der konvexen Krümmung der Federschiene direkt auf die Federschiene oder aber auf die Wischleiste eingreifen. Prinzipiell kann man sich ein System dieser Art so vorstellen, daß etwa am Rücken der Gummiwischleiste 18 und am darüberliegenden Bereich eines Hauptbügels 14 ein Halteband 50 eingespannt ist, welches den möglichen Abstand A zwischen der Gummiwischleiste und diesem Tragbügel begrenzt. Dieses Halteband 50 wird man vorzugsweise an einer solchen Stelle vorsehen, an der die Federschiene ihre größtmögliche Auslenkung aus einer gestreckten Lage hat. Dies ist überlicherweise in der Mitte des Wischblattes, also unterhalb der Anlenkstelle des Wischarmes, der Fall.

Fig. 4 zeigt, daß dieses Halteband nicht gespannt ist, wenn die Wischlippe 21 auf der zu reinigenden Scheibe 60 aufliegt. Dieses Halteband 50 entfaltet seine abstandsbegrenzende Wirkung nur dann, wenn der Scheibenwischer auf eine Auflauframpe aufläuft und von der Scheibe abgehoben wird. Dann wird dieses Halteband 50 gespannt. Selbstverständlich kann man diesen Grundgedanken auch derart ausbilden, daß beispielsweise von einer Kunststoffederschiene einstückig ein Fanghaken absteht, der einen Durchbruch im Tragbügelsystem durchsetzt, wie das bezüglich des Fanghakens 30 beschrieben ist. Andererseits kann man sich natürlich auch vorstellen, daß der Fanghaken 30 zwischen Zwischenbügel und Hauptbügel bei der Ausf+hrung nach Fig. 1 durch ein solches Halteband ersetzt werden könnte.

Bei einem nach der vorliegenden Erfindung ausgestalteten Wischblatt genügt also eine verhältnismäßig kleine Rampe zum völligen Abheben der Wischleiste von der Scheibe. Nun muß allerdings berücksichtigt werden, daß sich das Wischblatt gegenüber dem Wischarm verschwenken kann und daher möglicherweise dennoch das nicht in der Zeichnung dargestellte Ende des Wischblattes auf der zu reinigenden Scheibe aufliegt. Um auch diesen an sich nicht besonders bedeutsamen Mangel zu beheben, ist auch die mögliche Drehbewegung des Wischblattes 12 gegenüber den Wischarm 11 durch eine Fig. 1 angedeutete Spannfeder 70 begrenzt. Diese Spannfeder 70 sol also dafür sorgen, daß bei einem abgehobenen Scheibenwischer das Wischblatt parallel zum Wischarm ausgerichtet bleibt.

Bei den bisher beschriebenen Ausführungsbeispielen sind die Mittel zur Begrenzung der konvexen Krümmung der Federschiene am Wischblatt selbst vorgesehen. Denkbar sind aber auch Ausführungen, bei denen diese Mittel ortsfest an der Karosserie des Fahrzeugs angeordnet sind. Man könnte sich beispielsweise eine Lösung derart vorstellen, daß an mehreren Punkten von der Karosserie Auflaufstifte 80 abstehen, die unter die Krallenbügel bzw. Zwischenbügel 15 greifen und diese Bügel damit in einer parallelen Lage zu der zu reinigenden Scheibe halten. Auch auf diese Weise kann zuverlässig sichergestellt werden, daß die Wischlippe nicht durch die Vorspannung der Federschiene wenigstens bereichsweise auf der zu reinigenden Scheibe aufliegt.

Insgesamt ist also ein Wischblatt geschaffen, das ohne großen technischen Aufwand völlig von einer zu reinigenden Scheibe abgehoben werden kann, wobei der notwendige Hub im Vergleich zu den bisher bekannten Lösungen verkleinert ist. Man wird dabei vorzugsweise eine Lösung anstreben, bei der in dieser Abhebestellung die Gummiwischleiste keine Krümmung aufweist, weil dann optimale Verhältnisse vorliegen. Würde man den Abstand zwischen dem Tragbügelsystem und dem Rücken der Gummiwischleiste im mittleren Bereich stärker verringern als dies in Fig. 1 dargestellt ist, wurde die Bauhöhe insgesamt wieder vergrößert, weil in den Endbereichen die Wischleiste entsprechend verformt würde. Da normalerweise die Federschiene ihre größte Auslenkung k im mittleren Bereich der Wischleiste aufweist, genügt es in aller Regel, wenn der Schwenkwinkel der in diesen Bereich ragenden Bügel begrenzt wird. Durch die vollständige Entlastung der Gummiwischlippe wird einerseits eine zu Dauerschäden führende plastische Verformung der wischlippe verhindert und es wird außerdem im Winter ein Festfrieren und damit eventuell eine Beschädigung beim Losreißen der Wischlippe zuverlässig verhindert. Damit wird insgesamt die Betriebssicherheit der Wischeranlage wesentlich verbessert.

**Patentansprüche**

1. Scheibenwischer, insbesondere für Kraftfahrzeuge, mit einem an einem Wischarm (11) anlenkbaren Wischblatt (12) mit einem Tragbügelsystem (13) zur Führung einer elastischen Wischleiste (18), der wenigstens eine Federschiene (20) zur Verteilung des Anpreßdruckes der Wischleiste (18) auf der zu reinigenden Scheibe zugeordnet ist, die in unbelastetem Zustand eine in bezug zum Tragbügelsystem konvex gekrümmte Lage einnimmt, dadurch gekennzeichnet, daß Mittel (30, 40, 50, 80) vorhanden sind, die die konvexe Krümmung der Federschiene (20) auf einen Wert begrenzen, der kleiner ist als der in unbelastetem Zustand maximal mögliche Wert.

2. Scheibenwischer nach Anspruch 1, dadurch gekennzeichnet, daß durch die Mittel (30, 40, 50) eine konvexe Durchbiegung der Federschiene (20) über ein bestimmtes Maß hinaus in jeder Wischblattstellung während der Wischbewegung verhindert wird.

3. Scheibenwischer nach Anspruch 1 oder 2, dadurch gekennzeichnet, daß zu dem Tragbügelsystem (13) ein übergeordneter Bügel (Hauptbügel (14), Zwischenbügel (15)) und wenigstens ein schwenkbar daran aufgehängter untergeordneter Bügel (Zwischenbügel (15), Krallenbügel (16)) gehört und daß durch die Mittel (30, 40) zur Begrenzung der konvexen Krümmung der Federschiene (20) der mögliche Schwenkwinkel (W1) eines untergeordneten Bügels (15, 16) gegenüber einem übergeordneten Bügel einseitig begrenzt ist.

4. Scheibenwischer nach Anspruch 3, dadurch gekennzeichnet, daß von einem übergeordneten Bügel (15) ein vorzugsweise auf den Steg (22) des frei abstehenden Bügelabschnittes des untergeordneten Bügels (16) einwirkender Drehbegrenzungsanschlag (40) absteht.

5. Scheibenwischer nach Anspruch 3, dadurch gekennzeichnet, daß zwischen einem übergeordneten Bügel (14) und dem darunter liegenden Bügelabschnitt (15) ein den Schwenkwinkel (W1) begrenzender Fanghaken wirkt.

6. Scheibenwischer nach Anspruch 5, dadurch gekennzeichnet, daß der Fanghaken (30) vom untergeordneten Bügel (15) nahezu senkrecht zu dessen Längsrichtung absteht, einen Durchbruch (23) im Steg (22) des übergeordneten Bügels (14) durchsetzt und an seinem freien Ende wenigstens einen den Steg (22) des übergeordneten Bügels (14) hintergreifenden Haken (32) aufweist.

7. Scheibenwischer nach Anspruch 1 oder 2, dadurch gekennzeichnet, daß durch die Mittel (50) zur Begrenzung der konvexen Krümmung der Federschiene (20) der mögliche Abstand (A) zwischen der Wischleiste (8) und dem Tragbügel (14) einseitig begrenzt ist.

8. Scheibenwischer nach Anspruch 7, dadurch gekennzeichnet, daß im Bereich der größtmöglichen Auslenkung der Federschiene (20) bzw. der Wischleiste (18) relativ zum Tragbügelsystem, also vorzugsweise im Bereich der Anlenkstelle des Wischblattes (12) am Wischarm (11) zwischen dem Tragbügelsystem (13) und der Wischleiste (18) oder der Federschiene (20) ein Fankhaken oder Halteband (50) wirkt.

9. Scheibenwischer nach Anspruch 8, dadurch gekennzeichnet, daß von der Federschiene vorzugsweise einstückig ein Fanghaken absteht, der durch einen Durchbruch im Rücken des Tragbügels hindurchragt und an seinem freien Ende einen den Steg des Tragbügels hintergreifenden Haken aufweist.

10. Scheibenwischer nach wenigstens einem der vorhergehenden Ansprüche, dadurch gekennzeichnet, daß der Schwenkwinkel zwischen zwei Bügeln oder der Abstand (A) zwischen Wischleiste (18) und Tragbügelsystem (13) durch ein zwischen den entsprechenden Teilen verspanntes Halteband (50) begrenzt wird.

11. Scheibenwischer nach wenigstens einem der vorhergehenden Ansprüche, dadurch gekennzeichnet, daß die Drehbewegung des Wischblattes (12) gegenüber dem Wischarm (11) begrenzt ist.

12. Scheibenwischer nach Anspruch 1, dadurch gekennzeichnet, daß durch die Mittel (80) eine konvexe Durchbiegung der Federschiene (20) über ein bestimmtes Maß hinaus nur in einer Parkstellung des Wischblattes (12) verhindert wird.

13. Scheibenwischer nach Anspruch 11, dadurch gekennzeichnet, daß die Mittel (80) karosseriefest angeordnet sind und in der Parkstellung des Wischblattes (12) unter die Bügel (15, 16) greifen und diese Bügel (15, 16) in einer zur Scheibe parallelen Lage halten.

14. Scheibenwischer nach wenigstens einem der vorhergehenden Ansprüche dadurch gekennzeichnet, daß die Federschiene (20) in der Parklage des Wischblatts (12) keine Krümmung aufweist.

15. Scheibenwischer nach wenigstens einem der vorhergehenden Ansprüche, dadurch gekennzeichnet, daß die Mittel zur Begrenzung der Krümmung der Federschiene (20) auf deren mittleren Bereich einwirken.

16. Scheibenwischer nach Anspruch 15, dadurch gekennzeichnet, daß der Schwenkwinkel (W1) des die Federschiene (20) in ihrem mittleren Bereich führenden Bügels (15) begrenzt ist.

## Revendications

1. Essuie-glace, notamment pour véhicules automobiles, du type comprenant un palai d'essuie-glace (12) pouvant s'articuler sur un porte-balai (11) et comportant un système d'arceaux de support (13) servant à guider une lame de balai (18), élastique, à laquelle est associée au moins une baguette-ressort (20) servant à répartir la pression d'appui de cette lame de balai (18) sur le pare-brise à nettoyer, cette baguette-ressort (20) adoptant, dans l'état où elle n'est pas soumise à une sollicitation, une position incurvée convexe par rapport au système d'arceaux de support, caractérisé en ce qu'il est prévu des moyens (30, 40, 50, 80) qui limitent la courbure convexe de la baguette-ressort (20) à une valeur qui est inférieure à la valeur maximale possible dans l'état non soumis à une sollicitation.

2. Essuie-glace suivant la revendication 1, caractérisé en ce que les moyens (30, 40, 50) empêchent, pour chaque position du balai d'essuie-glace pendant le mouvement de balayage, une flexion convexe de la baguette-ressort (20) au-delà d'une amplitude déterminée.

3. Essuie-glace suivant la revendication 1 ou 2, caractérisé en ce que le système d'arceaux de support (13) comprend un arceau d'ordre supérieur (arceau principal (14), arceau intermédiaire (15)) et au moins un arceau d'ordre inférieur (arceau intermédiaire (15), arceau à griffes (16)) qui est suspendu de manière basculante sur le premier et en ce que, grâce aux moyens (30, 40) servant à limiter la courbure convexe de baguette-ressort (20), l'angle possible de basculement (W1) d'un arceau d'ordre inférieur (15, 16) par rapport à un arceau d'ordre supérieur est limité d'un côté.

4. Essuie-glace suivant la revendication 3, caractérisé en ce qu'il est prévu, s'écartant d'un arceau d'ordre superieur (15), une butée de limitation de pivotement (40) agissant de préférence sur le dos (22) du tronçon de l'arceau d'ordre inférieur (16) qui s'écarte librement.

5. Essuie-glace suivant la revendication 3, caractérisé en ce qu'un crochet d'arrêt limitant l'angle de basculement (W1) agit entre l'arceau d'ordre supérieur (14) et le tronçon d'arceau (15) se trouvant au-dessous.

6. Essuie-glace suivant la revendicatin 5, caractérisé en ce que le crochet d'arrêt (30) s'écarte de l'arceau d'ordre inférieur (15) d'une manière pratiquement perpendiculaire à la direction longitudinale de celui-ci, traverse une ouverture (23) ménagée dans le dos (22) de l'arceau d'ordre supérieur (14) et comporte, à son extrémité libre, au moins un crochet (32) venant en prise derrière le dos (22) de l'arceau d'ordre supérieur (14).

7. Essuie-glace suivant la revendication 1 ou 2, caractérisé en ce que, grâce au moyen (50) permettant de limiter la courbure convexe de la baguette-ressort (20), l'écartement possible (A) entre la lame de balai (18) et l'arceau de support (14) est limité d'un côté.

8. Essuie-glace suivant la revendication 7, caractérisé en ce que, dans la zone de la déviation la plus grande possible de la baguette-ressort (20) ou de la lame de balai (18) par rapport au système d'arceaux de support, donc de préférence dans la zone de l'emplacement d'articulation du balai d'essuie-glace (12) sur le porte-balai (11), un crochet d'arrêt ou un collier de retenue (50) agit entre le système d'arceaux de support (13) et la lame de balai (18) ou la baguette-ressort (20).

9. Essuie-glace suivant la revendication 8, caractérisé en ce qu'un crochet d'arrêt s'écarte de la baguette-ressort, de préférence en étant venu de matière avec elle, ce crochet d'arrêt traversant une ouverture ménagée dans le dos de l'arceau de support et comportant, à son extrémité libre, un crochet venant en prise derrière ce dos de l'arceau de support.

10. Essuie-glace suivant au moins l'une des revendications précédentes, caractérisé en ce que l'angle de basculement entre deux arceaux, ou l'écartement (A) entre la lame de balai (18) et le système d'arceaux de support (13), est limité à l'aide d'un collier de retenue (50) tendu entre les pièces correspondantes.

11. Essuie-glace suivant au moins l'une des revendications précédentes, caractérisé en ce que le mouvement de pivotement du balai d'essuie-glace (12) par rapport au porte-balai (11) est limité.

12. Essuie-glace suivant la revendication 1, caractérisé en ce que, grâce auxdits moyens (80), une flexion convexe de la baguette-ressort (20) au-delà d'une amplitude déterminée n'est empêchée que dans une position de repos du balai d'essuie-glace (12).

13. Essuie-glace suivant la revendication 11, caractérisé en ce que lesdits moyens (80) sont disposés de manière fixe sur la carrosserie et, dans la position de repos du balai d'essuie-glace (12), viennent en prise au-dessous des arceaux (15, 16) et maintiennent ces arceaux (15, 16) dans une position parallèle au pare-brise.

14. Essuie-glace suivant au moins l'une des revendications précédentes, caractérisé en ce que la baguette-ressort (20) n'offre pas de courbure dans la position de repos du balai d'essuie-glace (12).

15. Essuie-glace suivant au moins l'une des revendications précédentes, caractérisé en ce que les moyens servant à limiter la courbure de la baguette-ressort (20) agissent sur la partie centrale de cette dernière.

16. Essuie-glace suivant la revendication 15, caractérisé en ce que l'angle de pivotement (W1) de l'arceau (15) guidant la baguette-ressort (20) dans sa partie centrale est limité.

## Claims

1. A windshield wiper, especially for motor vehicles, comprising a wiper blade (12) that can be linked to a wiper arm (11) and that is provided with a carrier yoke system (13) for guiding an elastic rubber element (18), which at least on flexible strip (20) is assigned to for distributing the pressure of the rubber element (18) on the windshield to be cleaned, which flexible strip (20), no pressure being exerted onto it, is convexly bent with respect to the carrier zoke system, wherein there are means (30, 40, 50, 80) limiting the maximum possible value when no pressure is exerted onto said flexible strip (20).

2. A windshield wiper according to claim 1, wherein the means (30, 40, 50) prevent the flexible strip (20) from being convexly bent beyond a certain extent in each position of the wiper blade during operation.

3. A windshield wiper according to claim 1 or 2, wherein the carrier yoke system (13) comprises a yoke (main yoke (14) intermediate yoke (15)) and swivellably mounted to the yoke and wherein by way of the means (30, 40) for limiting the convex bend of the flexible strip (20) the possible swivelling angle (W1) of a subordinate yoke (15, 16) with respect to the yoke is limited on the one side.

4. A windshield wiper according to claim 3, wherein a stop limiting the rotation (40) is sticking out of a yoke (15) preferably acting upon the web (22) of the yoke section of the subordinate yoke (16) freely sticking out.

5. A windshield wiper according to claim 3, wherein a tail hook limiting the swivelling angle (W1) acts between a yoke (14) and the yoke section (15) underneath.

6. A windshield wiper according to claim 5, wherein the tail hook (30) is sticking out of the subordinate yoke (15) nearly perpendicularly with respect to the longitudinal direction of said yoke (15), penetrates an aperture (23) in the web (22) of the yoke (14) and at its free end comprises at least one hook (32) engaging behind the web (22) of the yoke (14).

7. A windshield wiper according to claim 1 or 2, wherein by way of the means (50) for limiting the convex bend of the flexible strip (20) the possible distance (A) from the rubber element (8) to the carrier yoke (14) is limited on the one side.

8. A windshield wiper according to claim 7, wherein in the area of the biggest possible bend of the flexible strip (20) or of the rubber element (18) in relation to the carrier yoke system, that is, preferably in the area of the linking point of the wiper blade (12) on the wiper are (11) a tail hook or a holding band (50) act between the carrier yoke system (13) and the rubber element (18) or the flexible strip (20).

9. A windshield wiper according to claim 8, wherein a tail hook is preferably integrally sticking out of the flexible strip, which tail hook penetrates an aperture in the back of the carrier yoke and at its free end comprises a hook engaging behind the web of the carrier yoke.

10. A windshield wiper according to at least one of the preceding claims, wherein the swivelling angle between the two yokes or the distance (A) between the rubber element (18) and the carrier yoke system (13) is limited by a holding band (50) tensioned between the respective parts.

11. A windshield wiper according to at least one of the preceding claims, wherein the rotary movement of the wiper blade (12) is limited with respect to the wiper arm (11).

12. A windshield wiper according to claim 1, wherein the means (80) prevent the flexible strip (20) from being convexly bent beyond a certain extent only in a parking position of the wiper blade (12).

13. A windshield wiper according to claim 11, wherein the means (80) are mounted to the car body and in the parking position of the wiper blade engage under the yokes (15, 16) and hold these yokes (15, 16) in a position parallel to the windshield.

14. A windshield wiper according to at least one of the preceding claims, wherein the flexible strip (20) is not bent in the parking position of the wiper blade (12).

15. A windshield wiper according to at least one of the preceding claims, wherein the means for limiting the bend of the flexible strip (20) act upon the middle area of said flexible strip (20).

16. A windshield wiper according to claim 15, wherein the swivelling angle (W1) of the yoke (15) guiding the flexible strip (20) in its middle area is limited.

Fig. 1

Fig. 2

Fig. 3

Fig. 4